# EUROPEAN PATENT SPECIFICATION

(11) **EP 4 536 045 B1**
(45) Date of publication and mention of the grant of the patent: **15.04.2026**
(21) Application number: 23730800.2
(22) Date of filing: 05.06.2023
(51) Int. Cl.: A47J 31/36, A47J 31/46, A47J 31/06

(54) **COFFEE BREWING APPARATUS**
KAFFEEBRÜHVORRICHTUNG
APPAREIL D'INFUSION DE CAFÉ

(30) Priority: 10.06.2022 EP 22178274
(43) Date of publication of application: 16.04.2025
(73) Proprietor: Société des Produits Nestlé S.A., 1800 Vevey (CH)
(72) Inventor: FLICK, Jean-Marc, 1405 POMY (CH); POLSTER, Johannes, 1350 Orbe (CH); BLUNIER, Jean-Daniel, 1470 Estavayer-le-Lac (CH); MARANDET, Carine, 25560 Frasne (FR)
(74) Representative: Ducreux, Marie
(86) International application number: PCT/EP2023/064939
(87) International publication number: WO 2023/237471

(56) References cited:
- WO-A1-2016/132412
- WO-A1-2022/091153
- US-A1- 2013 014 649
- US-A1- 2014 150 664

## Description

### Field of the invention

The present invention relates to an apparatus for preparing coffee beverages. In particular, it relates to a fully automatic coffee apparatus.

### Background of the invention

Full automatic coffee machines are configured to prepare coffee in an automatic manner, and first and foremost, to prepare pressurized coffees like espresso, ristretto, Lungo, Americano, ...

For that reason, generally, in full automatic coffee machines, a pressurized coffee is prepared in a brewing chamber configured to receive a quantity of roasted and ground (R&G) coffee powder, to compress said quantity of coffee by means of at least one movable piston and to introduce pressurized water through the compressed coffee powder to extract coffee. Finally, the extracted coffee beverage flows out from an outlet of the brewing chamber into a drinking cup.

Coffee consumers request more and more varieties and would like to drink other types of coffees than pressurized coffees, in particular the so-called drip or filter like coffee which a long coffee prepared by contacting R&G coffee powder with hot water at low pressure. There is a need for full automatic machines able to prepare pressurized coffees and filter like coffees.

Different solutions exist to answer this need.

Some full automatic coffee machines provide an external accessory like a coffee jug (EP3669715) or a specific coffee chamber (DE102018125703) configured to hold R&G coffee powder and pass hot water dispensed from the machine through said accessory and coffee powder. Yet the handling of this accessory is cumbersome for the operator : the accessory must be filled with coffee powder manually, the accessory attached manually to the water dispensing outlet of the machines and at the end, the extracted coffee must be removed and the accessory cleaned manually.

Other full automatic machines enables the preparation of either pressurized coffee or filter like coffee through the control of the movement of the piston in the chamber of full automatic machine.

JP2002183827 proposes to control of the movement of the piston so as to extract coffee with the coffee powder not compressed when filter like coffee is selected, while the piston is controlled to be moved to compress the coffee powder when pressurized coffee is selected.

US2014150664, WO2014119414 and EP3253263 disclose a similar method.

Within these prior arts, no interest is provided for the importance of adjusting the pressure of water to the type of coffee prepared in the brewing chamber. It appears that the pressure used for the preparation of the filter like coffee is more a consequence of the size of the chamber set by the position of the piston rather than the selection of a specific pressure of water to be introduced inside the chamber.

As a result, the preparation of the filter like coffee is not optimised.

One solution is to provide hot pressurised water from an adjustable flow pump controlled to provide water at different pressures like in EP1267685 or to provide the brewing chamber with two different coffee beverage outlets configured for opening at different pressure thresholds like in US2014150664. Yet such embodiments are complex and expensive.

An object of the invention is to address the above existing problems.

### Summary of the invention

In a first aspect of the invention, there is provided a full automatic coffee machine, said machine comprising :
- a coffee extraction unit, said coffee extraction unit comprising :
   . a brewing chamber for receiving roasted and ground coffee powder, said chamber comprising an upper rim and a bottom wall, and
   . an upper piston,
      . said upper piston being configured to be movable through the upper rim of the brewing chamber and inside the brewing chamber further to the relative movement of the brewing chamber and the upper piston, and
   . a water inlet,
   . a liquid outlet duct,
   . a lower piston movable inside said brewing chamber between :
      . a lowest position wherein the lower piston lies on the bottom wall of the brewing chamber, and
      . a highest position wherein the lower piston is at the upper rim of the brewing chamber,
   . a discharge device for spent coffee,
      . wherein the brewing chamber and/or the upper piston are relatively movable between :
         . an open position for introducing roasted and ground coffee powder or ejecting extracted roasted and ground coffee powder, and
         . at least two different first and second closed positions configured for brewing roasted and ground coffee powder, wherein the first closed position is configured for compacting coffee during brewing and the second closed position is configured for not compacting coffee during brewing,
- a pressurized hot water fluid system comprising at least a water supply, a water heating device and a water pump wherein said system is connected to the water inlet of the coffee extraction unit,

wherein the fluid supply system comprises a pressure bypass valve downstream the water pump and wherein the predetermined threshold pressure of the fluid dispensed by said pressure bypass valve is adjustable, preferably by a motorised actuator, and
wherein the full automatic coffee machine comprises a control system configured :
   - to move the brewing chamber and/or the upper piston to the first closed position or to the second position for brewing roasted and ground coffee powder, and
   - to adjust the predetermined threshold pressure of the fluid dispensed by the pressure bypass valve to a first predetermined threshold pressure, respectively to a second predetermined threshold pressure, when the brewing chamber and the upper piston are in the first closed position, respectively in the second position.

The coffee extraction unit comprises a brewing chamber that is designed and oriented along a longitudinal axis. This axis can be oriented substantially vertically or inclined relatively to vertical or even oriented substantially horizontally.

The brewing chamber defines an internal volume configured for receiving a dose of roasted and ground coffee powder, preferably roast and ground coffee, to be extracted. Usually, the chamber presents a cylindrical shape with a lateral wall extending from a bottom wall up to an upper rim. The longitudinal axis of the cylindrical shape is preferably oriented substantially vertically.

The top of the brewing chamber is opened to enable the introduction of the coffee powder to be extracted.

The extraction unit comprises a water inlet configured to introduce water inside the chamber to extract coffee powder present inside the chamber.

The coffee machine comprises two pistons able to move through the internal volume of the chamber.

The first piston is able to move through the upper part of the chamber and is called the upper piston. This upper piston is designed to be able to be movable through the upper rim of the brewing chamber and inside the brewing chamber further to the relative movement of the brewing chamber and the upper piston. This upper piston is designed to enable the compression of the coffee powder present inside the chamber and, for this reason, the upper piston is also called compression piston.

The second piston is called the lower piston. The lower piston is movable inside the brewing chamber between two end positions. One end position is the lowest position of the second piston inside the chamber. In this lowest position, the head of the lower piston lies on the bottom wall of the brewing chamber. Generally, the lower piston is positioned in this lower position during the operation of introducing coffee powder inside the chamber and during the operation of extracting coffee powder with water.

The other end position is the highest position of the second piston inside the chamber. In this higher position, the upper surface of the head of the lower piston is at the upper rim of the brewing chamber. Generally, the lower piston is positioned in this higher position during the operation of evacuating the extracted coffee powder from the chamber.

The lower piston comprises a head and a rod and, for this reason, the lower piston is also called compression piston.

The lower piston comprises a head and a rod.

The lower piston is assembled to the brewing chamber so that its piston rod extends through an opening in the bottom wall of the brewing chamber, the bottom free end of the rod being located outside the chamber. The piston rod is configured to move up and down inside the opening.

The extraction unit comprises a liquid outlet duct. This duct enables the dispensing of extracted beverage, preferably coffee, from the chamber. Usually, this duct extends from the piston to a nozzle for dispensing the beverage in a cup.

The coffee extraction unit can be configured to implement a top-down extraction (gravitational extraction) or configured to implement a bottom-up extraction (anti-gravitational extraction).

In the unit configured for bottom-up extraction, water is introduced through the bottom of the chamber and extracted coffee is dispensed through the top of the chamber. Usually, for the bottom-up configuration :
- the water inlet is positioned inside the lateral wall of the chamber, preferably close to the bottom wall.
- the head of the lower piston presents water openings configured to introduce water from the water inlet upwards and to the coffee powder present inside the chamber,
- the upper piston comprises the liquid outlet duct.

In the unit configured for top-down extraction, water is introduced through the top of the chamber and extracted coffee is dispensed through the bottom of the chamber. Usually, for the top-down configuration :
- the water inlet is positioned inside the upper piston,
- the head of the upper piston presents water openings configured to introduce water from the water inlet downwards and to the coffee powder present inside the chamber,
- the lower piston comprises the liquid outlet duct.

The machine comprises a supporting frame on which the brewing chamber is mounted.

The relative movements of the brewing chamber and the two pistons can be implemented indifferently by :
- keeping the brewing chamber fixed to the supporting frame and actuating the pistons inside and/or out the chamber,
   and/or
- actuating the brewing chamber relatively to the supporting frame while the pistons remain fixed or are passively driven by the movement of the chamber that holds them.

In one preferred embodiment, the brewing chamber is made movable by driving means. The driving means can be a rack or any other known means.

Within this embodiment, preferably :
- the upper piston is fixed,
- the rod of the lower piston comprises a free bottom end located outside the brewing chamber and movable with said piston and said chamber,
- the apparatus comprises a fixed bottom stop wall able to contact with the bottom end of the rod of the lower piston,
- the movement of the lower piston depends on the movement of the brewing chamber and/or the contact of the free bottom end with the bottom stop wall or the contact of the lower piston with the upper piston.

Preferably, in this preferred embodiment, the lower piston is free from guiding means, from retaining means and from springs meaning that the lower piston is passive and there is no active means to change the position of lower piston with respect of the brewing chamber.

Preferably, in this preferred embodiment, the rod and/or the lower piston are provided with friction means to control their movement with respect to the internal walls of the brewing chamber. These means enable the lower piston to be maintained in one position with respect to the brewing chamber.

In an alternative embodiment, the brewing chamber can be mounted fixed in the machine and the upper and lower pistons can be made movable inside and out of the brewing chamber by driving means.

The coffee extraction unit comprises a discharge device for extracted coffee powder (coffee cake). This discharge device is designed to swipe the area above the upper rim of the chamber by any rotation or translation movement when the lower piston is positioned at its highest position

The full automatic coffee machine comprises a pressurized hot water fluid system comprising at least a water supply, a water heating device and a water pump. This system is connected to the water inlet of the coffee extraction unit. Accordingly, hot pressurized water is supplied to the brewing chamber for the extraction of roasted and ground coffee powder.

In addition, the fluid supply system comprises a pressure bypass valve. This pressure bypass valve is positioned downstream the water pump meaning that the outlet of the pump dispensing pumped fluid is connected with the inlet of the valve. This pressure bypass valve determines the pressure of water dispensed to the coffee extraction unit. This predetermined threshold pressure of the fluid dispensed by said pressure bypass valve is adjustable, preferably by a motorised actuator.

Generally, the full automatic coffee machine comprises a control system configured to :
- actuate the movement of the brewing chamber and/or the pistons,
- control the devices of the pressurized hot water fluid system, that is at least the water heating device, the water pump and the actuator of the pressure bypass valve.

As a result, this actuator provides a simple implementation to enable the adjustment of the water pressure during the coffee extraction and specifically depending on the type of coffee preparation (pressurized coffee or filter like coffee).

In addition, the control system is configured to make the brewing chamber and/or the upper piston relatively movable one to the other between :
- an open position for introducing roasted and ground coffee powder or ejecting extracted roasted and ground coffee powder, and
- at least two different first and second closed positions configured for brewing roasted and ground coffee powder.

In the first closed position of the brewing chamber and the upper piston, coffee is compacted during brewing, which enables the preparation of a pressurized coffee. Depending on the quantity and/or the volume of coffee introduced inside the chamber, the brewing chamber and/or the upper piston can be relatively movable to different first closed positions enabling compaction of introduced coffee.

On the contrary, in the second closed position of the brewing chamber and the upper piston, coffee is not compacted during brewing, which enables the preparation of a filter like coffee. Coffee powder remains loose inside the brewing chamber during the extraction.

Preferably, this second closed position of the brewing chamber defines the largest possible closed volume of the brewing chamber.

Finally, the control system is configured to adjust the predetermined threshold pressure of the fluid dispensed by the pressure bypass valve :
- to a first predetermined threshold pressure when the brewing chamber and/or the upper piston is moved to the first closed position,
   and
- to a second predetermined threshold pressure, when the brewing chamber and/or the upper piston is moved to the second closed position.

Consequently, the machine enables the optimal preparation of a pressurized coffee or a filter like coffee because the critical parameters of pressure and compression are met for each type of preparation .

Preferably, the first predetermined threshold pressure is greater than 4 bar and the second predetermined threshold pressure is less than 4 bar.

In one preferred embodiment, the coffee extraction unit comprises a coffee outlet valve and this valve is configured to dispense liquid from the liquid outlet duct either to a coffee dispensing area or to a waste collector.

Depending on the actuation of this valve, a part of the beverage dispensed from the brewing chamber can be sent to the waste collector. This is particularly useful during the preparation of the filter like coffee because the last part of the coffee usually comprises lot of residues and this last part can be diverted from the drinking cup.

In one particular embodiment, this coffee outlet valve can be actuated by the movement of the brewing chamber.

Preferably, the machine comprises one single tank for storing coffee beans and one grinder for grinding stored coffee beans and for dispensing roast and ground coffee in the brewing chamber.

Actually, the machine enables the preparation of filter like coffee or pressurized coffee from the same roast and ground coffee powder. There is no need to adapt the granulometry size of the powder or the type of coffee beans (roasting level) depending on the type of prepared coffee. The facts of :
- adapting the pressure, and
- implementing compaction or not
are sufficient to provide optimal preparation from the same roasted and ground coffee powder.

In a second aspect of the invention, there is provided a method for preparing a coffee beverage with a full automatic coffee apparatus such as described above, wherein said method comprises the steps of :
α - obtaining beverage selection input from the user about the type of preparation of the coffee in the list of at least a pressurized coffee and a filter like coffee,
β - based on the beverage selection input of step α, adjusting the predetermined threshold pressure of the bypass pressure valve to the first predetermined threshold pressure for a pressurized coffee or to the second predetermined threshold pressure for a filter like coffee,
a- in a dosing position, where the upper piston is at a distance from the upper rim of the chamber and outside the chamber, supplying a dose of roasted and ground coffee powder corresponding to the beverage selection input into the brewing chamber, then
b- based on the beverage selection input of step α, moving the chamber and the upper piston relatively one to the other to the first closed position for a pressurized coffee or to the second closed position for a filter like coffee, then
c - introducing hot water through the water inlet, extracting the coffee powder and dispensing extracted coffee beverage through the beverage outlet of the upper piston.
e- discharging the extracted coffee powder from the chamber.

In one preferred embodiment of the method, if the beverage selection input of step α is a filter like coffee, then at the end of step c), said method comprises the steps of :
d1- actuating the coffee outlet valve to dispense liquid from the liquid outlet duct to the waste collector, and
d2 - moving the chamber and the upper piston relatively one to the other to tamp the dose of extracted coffee powder and repeating this step at least once, preferably at least twice.

Preferably, in step d2), the chamber (1) and the upper piston (2) are maintained in the tamping position during one to 3 seconds.

Alternatively, if the beverage selection input of step α is a pressurized coffee, then at step b), the dose of coffee powder is compressed by the chamber and the upper piston.

Generally, in step e), the chamber, the upper piston and the lower piston are moved relatively one to the other in order to :
. position the upper rim of the chamber away from the upper piston, and
. position the lower piston at the upper rim of the brewing chamber, and
. discharging the extracted coffee powder from the lower piston.

In the present application the terms "internal", "top", "bottom" and "lateral" are used to describe the relational positioning of features of the invention. These terms should be understood to refer to the devices in their normal orientation when positioned in a full automatic coffee apparatus for the production of a beverage as shown in the figures.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Detailed description of exemplary embodiments

- Figures 1A is a schematic side view of a full automatic coffee machine comprising a bottom-up extraction chamber,
- Figure 1B is a perspective view of some elements of the machine of Figure 1A,
- Figure 2 is a magnified view of the brewing chamber of Figures 1A-1B,
- Figures 3A-3K illustrate the steps of preparation of a filter like coffee with the full automatic coffee machine of Figure 1A-1B,
- Figure 4 is a schematic illustration of the preferred water fluid system of the full automatic coffee machine of Figures 1A-1B,
- Figure 5 is a schematic illustration of the process control system of the full automatic coffee machine comprising the fluid system of Figure 4.
- Figure 6 is a schematic illustration of a pressure bypass valve of the fluid system.

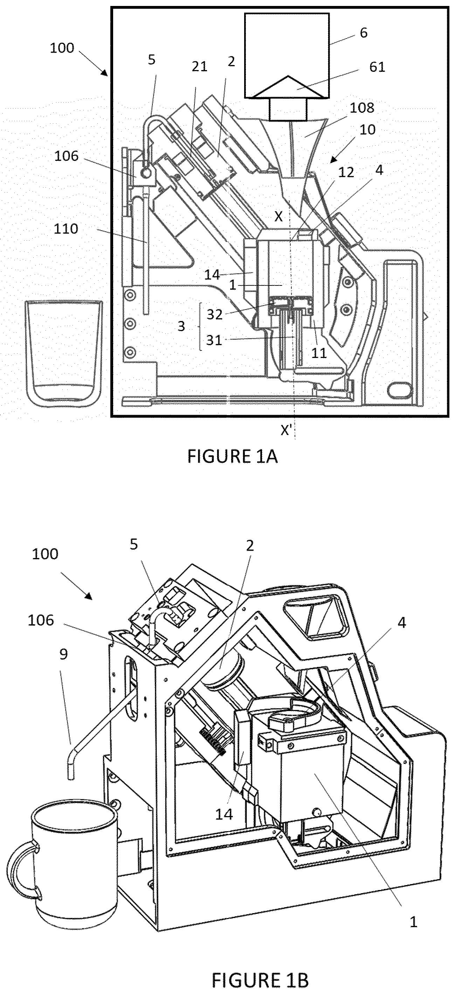

**Figure 1A** is a side view of a full automatic coffee machine 100 wherein side panels were removed to show the coffee extraction unit 10 and the coffee powder supply. **Figure 1B** is a perspective view showing the other side of this machine 100.

The coffee extraction unit 10 comprises a brewing chamber 1 for receiving a dose of roasted and ground coffee powder. Coffee is stored as beans inside a tank 6. This tank provides a grinder 61 with the coffee beans so that the dose of roasted and ground coffee can be dispensed from the grinder outlet through a funnel 108 inside the brewing chamber 1.

Preferably, the brewing chamber 1 is a cylinder with an open top extending from a bottom 11 to un upper rim 12 along an axis XX'. The chamber 1 comprises a water inlet conduit (not illustrated) to which a water fluid line is connected. The water inlet conduit is preferably positioned close to the bottom of the chamber such as inside the lower part of the lateral wall or optionally in a bottom wall.

The coffee extraction unit 10 comprises driving means to move vertically and obliquely the chamber 1 up and down and inversely. The chamber can be positioned in a carrier 14 configured to slide along a guiding shaft. Movement of this carrier can be implemented through gear box linking the carrier to a motor Any other embodiment can be implemented like a chamber mounted on a worm drive that is actuated by motor means, rotation of the worm causing vertical translation of the chamber.

The coffee extraction unit 10 comprises an upper piston 2. This upper piston 2 presents a lower end portion presenting a cylindrical design and having a diameter substantially equal to the diameter of the chamber so that the upper piston is able to pass through the upper rim 12 of the chamber and inside the brewing chamber further to the movement of the brewing chamber upwardly in direction of the upper piston. Accordingly, the upper piston enables the closure of the brewing chamber during the coffee extraction and the compression of a dose of roasted and ground coffee powder introduced inside the brewing chamber.

In addition, the upper piston 2 comprises a liquid outlet duct 21 extending from the bottom surface of the upper piston and connected by an outlet tube 112 to a coffee dispensing nozzle 9. In one preferred embodiment corresponding to the illustrated coffee machine, the liquid outlet duct 21 is connectable either to the coffee dispensing nozzle 9 or to an outlet line 110 to a waste collector by means of a coffee outlet valve 106. This preferred embodiment provides additional advantages in terms of quality of the coffee beverage.

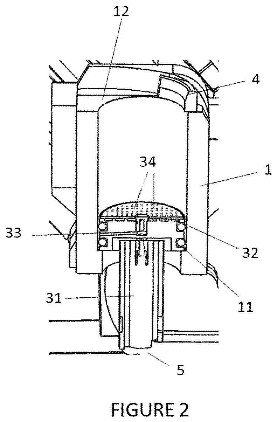

The coffee extraction unit 10 comprises a lower piston 3, magnified in **Figure 2****,** with a head 32 comprising water outlets 34 configured for distributing water introduced through the water inlet conduit during coffee preparation. This head acts as water distributor.

The head is disc-shaped and has a diameter substantially equal to the inner diameter of the chamber cylinder. The head forms the bottom wall of the chamber of he extraction unit. The lower piston 3 comprises a rod 31 fixed to the bottom of the disc-shaped head 32 and that extends downwards. The piston 3 is assembled to the chamber with the rod 31 extending below the bottom of the chamber.

The rod 31 of the lower piston is free from guiding means, retaining means spring wherein the lower piston is co-axially movable with the brewing chamber and within said brewing chamber.

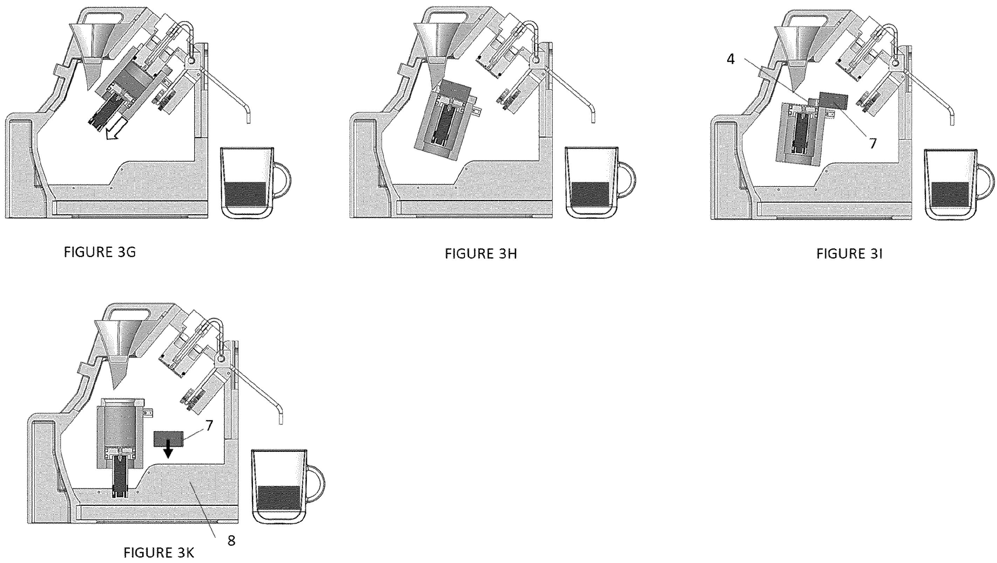

The lower piston 3 is movable inside the brewing chamber 1 between two end positions :
- a lowest position wherein the lower piston lies on the bottom wall 11 of the brewing chamber (Figure 2)
   and
- a higher position wherein the lower piston is at the upper rim 12 of the brewing chamber (Figure 3H).

The coffee extraction unit 10 comprises a discharge device 4 to sweep away a coffee cake that has been extracted (Figure 3I). It is positioned slightly above the upper rim of the brewing chamber. Coffee cake that has been swept away is stored in a waste collector.

In the present illustrated embodiment, the upper piston 2 is fixed. The lower piston 3 is co-axially movable :
- with the brewing chamber 1, which means that when the chamber 1 moves, it takes the lower piston simultaneously with it, and
- within the brewing chamber 1, which means that the lower piston can be moved at different positions inside the brewing chamber. The movement of the lower piston 3 inside the brewing chamber is driven by the contact of its head 32 against the upper piston 2 when the brewing chamber moves upwards and by a connection of its rod 31 with a cam (not illustrated). Any other mechanism from the state of the art enabling the relative movements of the chamber and the upper and lower pistons can be used, in particular when a top-down extraction is implemented.

This full automatic coffee machine comprises a user interface (not illustrated) to enable the selection of the type of coffee, in particular the choice of filter like coffee or pressurized coffee preparation.

The hardware of the user interface may comprise any suitable device(s), for example, the hardware comprises one or more of the following : buttons, such as a joystick button, knob or press button, joystick, LEDs, graphic or character LDCs, graphical screen with touch sensing and/or screen edge buttons.

A part of the user interface can also be on a mobile app when the full automatic coffee machine is provided with a communication interface as described below. In that case, at least a part of input and output can be transmitted to the mobile device through the communication interface.

This full automatic coffee machine enables the preparation of pressurized coffee as well known in the state of the art by implementing the following steps :
a- in a dosing position, where the upper piston 2 is at a distance from the upper rim 12 of the chamber and outside the chamber, supplying a dose of roasted and ground coffee powder corresponding to a pressurized coffee preparation into the brewing chamber, then
b- moving the chamber 1 and the upper piston 2 relatively one to the other to a first position where :
   . the chamber upper opening is closed, and
   . the dose of coffee powder is compressed between the lower piston 3 and the upper piston 2,
   then
c - introducing hot water inside the chamber, extracting the coffee powder and dispensing extracted coffee through the beverage outlet 21 of the upper piston and then through the coffee dispensing nozzle 9 inside a cup, then
e- discharging the extracted coffee powder from the chamber by moving the chamber 1 away from the upper piston 2 so that the lower piston is moved upwardly inside the chamber up to the upper rim 12. At this position, the coffee cake can be swiped by the discharge device 4 and collected in the waste collector.

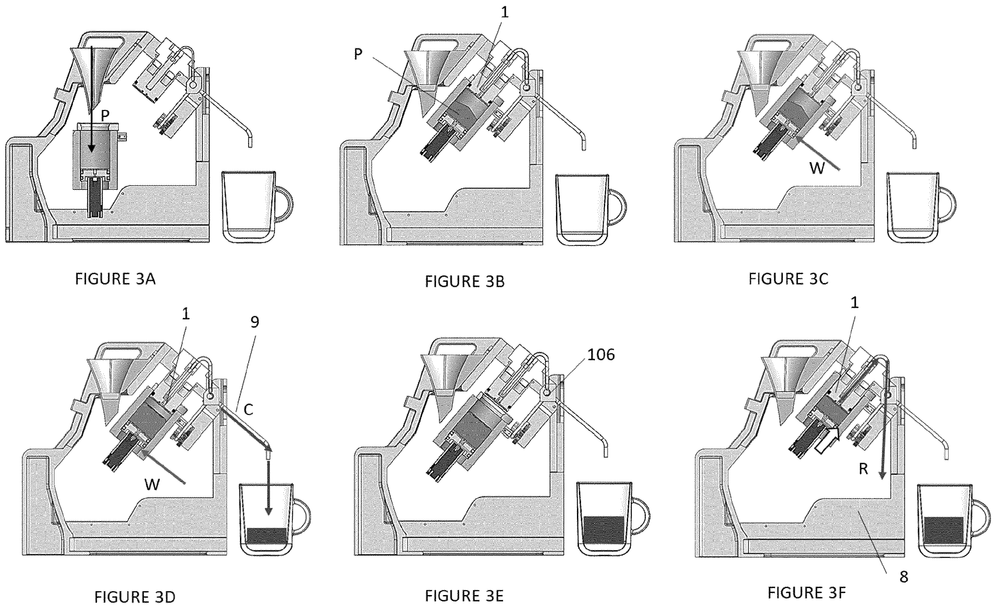

This full automatic coffee machine enables the preparation of filter like coffee too as illustrated in **Figures 3A-3K** by implementing the following steps :
a- in a dosing position (Figure 3A), where the upper piston 2 is at a distance from the upper rim 12 of the chamber and outside the chamber, supplying a dose of roasted and ground coffee powder P corresponding to a filter coffee preparation into the brewing chamber, then
b- moving the chamber 1 and the upper piston 2 relatively one to the other to a second position where the chamber upper opening is closed (Figure 3B). Yet, the dose of coffee powder P is not compressed between the lower piston 3 and the upper piston 2. As a result, the coffee powder is kept loose during the beverage preparation, which is a key condition for the preparation of filter like coffee. Preferably, the chamber 1 and the upper piston 2 are positioned one relatively to the other in order to provide the broadest internal volume while keeping the chamber closed.
c - introducing hot water W inside the chamber (Figure 3C) with the effect of extracting the coffee powder. As water fills the chamber volume, extracted coffee filter is dispensed through the beverage outlet 21 of the upper piston and then through the coffee dispensing nozzle 9 inside a cup (Figure 3D).

At the end of the introduction of water (Figure 3E), a certain volume of liquid remains inside the chamber since coffee powder was not compressed during the extraction. This extracted coffee and remaining liquid forms a sort of mud. The chamber must be thoroughly cleaned before a new coffee is prepared. Then, at least the following steps are implemented.
d2 - moving the chamber 1 and the upper piston 2 relatively one to the other to tamp the coffee powder present in the chamber. During said operation, the liquid still present in the chamber is evacuated through the outlet duct 21 of the upper piston. In a less preferred embodiment, this liquid issued from the tamping operation can be dispensed through the coffee nozzle 9 inside the drinking cup and forms part of the filter like coffee beverage. In that case, the final beverage can comprise some small solid residues which remains acceptable for this type of coffee.

The position of the chamber to obtain the tamping effect can be determined by the measure of the electric current supplied to the motor that actuates the chamber and stopping the movement of the chamber when a preset threshold of the current is reached. Any alternative known manner to detect the temping position can be used.

Preferably, this tamping is repeated at least once, preferably at least twice, by moving the chamber 1 away from the upper piston 2 and then moving them relatively one to the other to tamp the coffee powder. In this second tamping operation, the chamber can be moved only slightly away from the upper piston, e.g. by 10 or 20 mm ; there is no need to move the chamber to its broadest internal volume. This operation enables the introduction of air in the water inlet conduit and the evacuation of stagnant water coffee liquid residues, as a result the operation of drying ground coffee and compacting the coffee cake will be improved.

Several tamping operations enables a complete drying of the coffee powder. Improving drying guarantees a better cleaning of the chamber with less residues remaining in the chamber and a better swiping of the coffee cake 7 by the discharge device 4.

Depending on the type of coffee powder used, the coffee powder can present different hygroscopic properties that directly affect the facility to dry the wetted powder. This property can depend on the level of roasting, the nature of the coffee beans (arabica, robusta, ...), the grind size. Accordingly, the number of tamping operations can be adapted to the used coffee powder.
e- discharging the extracted coffee powder from the chamber by moving the chamber 1 away from the upper piston 2 so that the lower piston is moved upwardly inside the chamber up to the upper rim 12. At this position, the coffee cake can be swiped by the discharge device 4 and collected in the waste collector 8 (Figures 3G-3K).

In a preferred embodiment, the full automatic coffee machine comprises the coffee outlet valve 106 described in Figures 1A-1B and the following steps are implemented at the end of the introduction of water and the extraction of coffee (step c) in order to clean the chamber :
d1- actuating the coffee outlet valve 106 to be able to dispense liquid from the liquid outlet duct 21 to the waste collector 8, and
d2- moving the chamber 1 and the upper piston 2 relatively one to the other to tamp the coffee powder present in the chamber. During said operation, the liquid still present in the chamber is evacuated through the outlet duct 21 of the upper piston to the waste collector 8 as illustrated in Figure 3F. Consequently, the dispensed liquid that is rich in coffee residues is not dispensed in the final coffee filter beverage. Again, preferably, this tamping is repeated at least once, preferably at least twice, by moving the chamber 1 away from the upper piston 2 and then moving them relatively one to the other to tamp the coffee powder to ameliorate the cleaning of the chamber.

This coffee outlet valve 6 can also be used to enable the pre-heating of the chamber 1 with hot water before a coffee is prepared. Hot water can be introduced inside the chamber for a time sufficient to heat its walls and then this water can be dispensed by the coffee outlet valve 6 in the waste collector. Then coffee preparation can start.

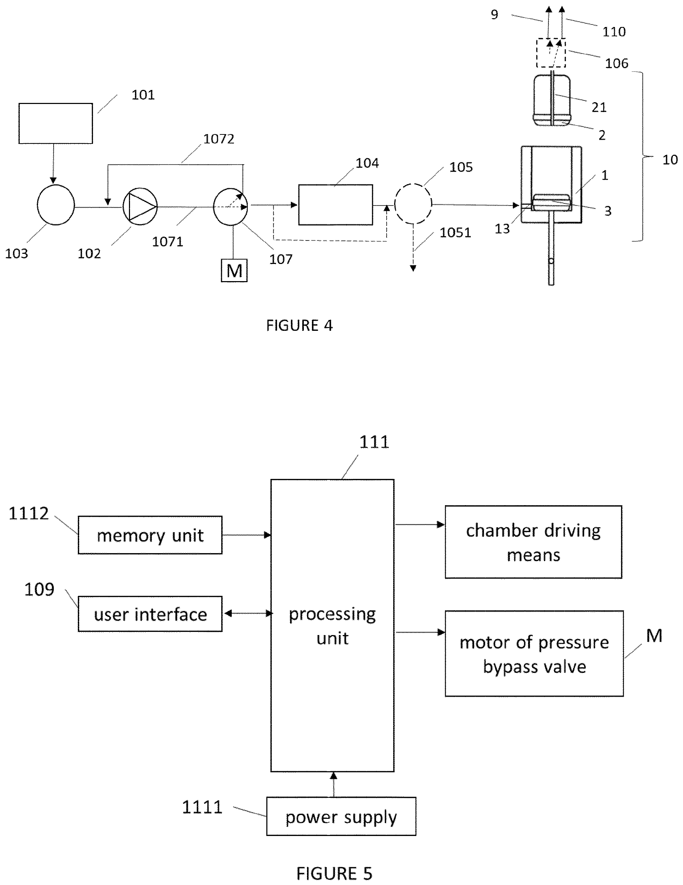

The full automatic coffee machine comprises a water fluid system such as illustrated schematically in **Figure 4****.**

The line of the system comprises at least successively :
- a water tank 101,
- a pump 102
- a heater 104,

The end of this hot water fluid line is connected to the water inlet 13 of the brewing chamber part of the coffee extraction unit 10.

Preferably, the fluid system can comprise a flowmeter 103 for a better control of the preparation.

Preferably, the fluid system can comprise a valve 105 to enable the dispensing of pumped water to another point of delivery, in particular at the dispensing area of the coffee drink for the preparation of an americano coffee. In such a preparation, hot water is added directly inside the cup of coffee that was dispensed from the brewing chamber.

In one particular embodiment, the fluid line can comprise a bypass line (illustrated in dotted line) around the heater 104 so that water can be used for a cold preparation. In that case, a cold brew coffee like is obtained.

In addition, the system comprises a pressure bypass valve 107 downstream the water pump 102. This pressure bypass valve comprises two check valves and this valve is configured so that the predetermined threshold pressure of the fluid dispensed by said pressure bypass valve is adjustable, preferably by a motorised actuator, for example a gear box 1075 connected with a motor M .

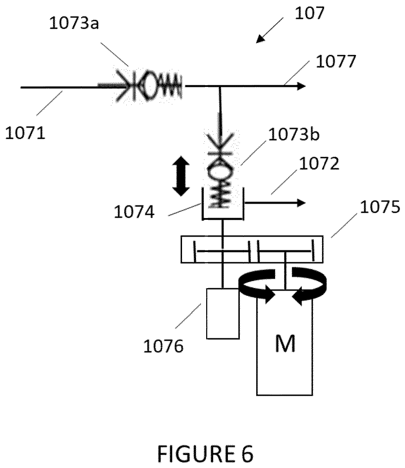

**Figure** 6 illustrates schematically such a pressure bypass valve 107. This valve 107 comprises a first check valve 1073a positioned between the inlet line 1071 for the pumped water and the outlet line 1077 for water dispensed to the heater. The valve 107 comprises a second check valve 1073b configured to adjust the maximum admissible pressure in the outlet line 1077.

The adjustment of this maximum admissible pressure is made through the control of the tension of the spring of the second check valve 1073b. This tension is adjusted through an adjustable screw 1074. The valve 107 comprises a motor M and a gear box 1075 to control the movement of the adjustable screw 1074 and accordingly the control of water pressure at the outlet line 1077. An absolute position sensor 1076 can be provided to control of the position of the screw. The valve 107 comprises a bypass line 1072 to deviate, if necessary depending on the adjusted predetermined threshold pressure, a part of water from the outlet line 1077. Preferably this bypass line 1072 is connected to an upstream part of the pump in the fluid system.

Consequently, the fluid supply system enables a simple and rapid adjustment of the pressure of water introduced in the extraction unit. This pressure can be adjusted at each coffee preparation and in particular can be different depending on the pressurised coffee or filter like coffee preparation.

In one simplest embodiment, the motor M is configured to adjust the screw 1074 between two positions : the first position corresponding to the pressure for the preparation of pressurized coffee, that is usually above 4 bar, preferably above 7 bar, and the second position corresponding to the pressure for the preparation of filter like coffee, that is usually below 4 bar.

**Figure** 5 is a schematic illustration of the control system of the full automatic coffee machine comprising the fluid system of Figure 4.

The control system typically comprises : a processing unit 111, a power supply 1111, a memory unit 1112.

The processing unit 111 generally comprises memory, input and output system components arranged as an integrated circuit, typically as a microprocessor or a microcontroller. The power supply 1111 is operable to supply electrical energy to the said controlled components and the processing unit.

The processing unit 111 generally comprises a memory unit 1112 for storage of instructions as program code and optionally data.

The instructions stored on the memory unit 112 can be idealised as comprising a program to adjust the internal volume of the chamber 1 and the predetermined threshold pressure of the fluid dispensed by the pressure bypass valve according to the type of coffee to be prepared based on the input provided by the user interface 109.

During a coffee beverage preparation, the control system is operable :
- to obtain the beverage selection input from the user about the type of preparation of the coffee in the list of : pressurized coffee and filter like coffee
- to actuate the driving means of the chamber to move the brewing chamber and/or the upper piston to the first closed position for a pressurized coffee input or to the second position for a filter like coffee preparation, and
- to actuate the motor M of the pressure bypass valve to adjust the predetermined threshold pressure of the fluid dispensed by the pressure bypass valve to a first predetermined threshold pressure for a pressurized coffee input to a second predetermined threshold pressure for a filter like coffee.

Although the present invention was illustrated with a full automatic coffee machine comprising an extraction unit based on a bottom-up extraction, the same method of preparation applies in an extraction unit based on a top-down extraction.

Although the invention has been described with reference to the above illustrated embodiments, it will be appreciated that the invention as claimed is not limited in any way by these illustrated embodiments.

Variations and modifications may be made without departing from the scope of the invention as defined in the claims.

As used in this specification, the words "comprises", "comprising", and similar words, are not to be interpreted in an exclusive or exhaustive sense. In other words, they are intended to mean "including, but not limited to".

**List of references in the drawings :**

| | | |
|---|---|---|
| coffee extraction unit | | 10 |
| brewing chamber | | 1 |
| | bottom | 11 |
| | upper rim | 12 |
| | water inlet | 13 |
| | carrier | 14 |
| upper piston | | 2 |
| | outlet duct | 21 |
| lower piston | | 3 |
| | piston rod | 31 |
| | head | 32 |
| | water inlet | 33 |
| | water outlets | 34 |
| discharge device | | 4 |
| outlet tube | | 5 |
| coffee beans tank | | 6 |
| grinder | | 61 |
| coffee cake | | 7 |
| waste collector | | 8 |
| dispensing nozzle | | 9 |
| coffee machine | | 100 |
| water tank | | 101 |
| pump | | 102 |
| flow meter | | 103 |
| heater | | 104 |
| valve | | 105 |
| americano water line | | 1051 |
| coffee outlet valve | | 106 |
| pressure bypass valve | | 107 |
| | inlet line | 1071 |
| | bypass line | 1072 |
| | check valves | 1073a, 1073b |
| | adjustable screw | 1074 |
| | gear box | 1075 |
| | position sensor | 1076 |
| | outlet line | 1077 |
| ground coffee funnel | | 108 |
| user interface | | 109 |
| outlet line to waste collector | | 110 |
| processing unit | | 111 |
| power supply | | 1111 |
| memory unit | | 1112 |
| water | | W |
| roasted and ground coffee powder | | P |
| coffee beverage | | C |
| residues | | R |
| motor | | M |

## Claims

1. Full automatic coffee machine (100), said machine comprising :
- a coffee extraction unit (10), said coffee extraction unit comprising :
. a brewing chamber (1) for receiving roasted and ground coffee powder, said chamber comprising an upper rim (12) and a bottom wall (11), and
. an upper piston (2),
. said upper piston being configured to be movable through the upper rim of the brewing chamber and inside the brewing chamber further to the relative movement of the brewing chamber and the upper piston, and
. a water inlet (13),
. a liquid outlet duct (21),
. a lower piston (3) movable inside said brewing chamber (1) between :
. a lowest position wherein the lower piston lies at the bottom (11) of the brewing chamber, and
. a highest position wherein the lower piston is at the upper rim (12) of the brewing chamber,
. a discharge device (4) for spent coffee,
. wherein the brewing chamber and/or the upper piston are relatively movable between :
. an open position for introducing roasted and ground coffee powder or ejecting extracted roasted and ground coffee powder, and
. at least two different first and second closed positions configured for brewing roasted and ground coffee powder, wherein the first closed position is configured for compacting coffee during brewing and the second closed position is configured for not compacting coffee during brewing,
- a pressurized hot water fluid system comprising at least a water supply (101), a water pump (102), and preferably a water heating device (104), wherein said system is connected to the water inlet (13) of the coffee extraction unit,
wherein the full automatic coffee machine comprises a control system configured :
- to move the brewing chamber and/or the upper piston to the first closed position or to the second closed position for brewing roasted and ground coffee powder,
**characterized in that**:
the fluid supply system comprises a pressure bypass valve (107) downstream the water pump and wherein the predetermined threshold pressure of the fluid dispensed by said pressure bypass valve is adjustable, preferably by a motorised actuator (1071), and
**in that** the control system is configured to adjust the predetermined threshold pressure of the fluid dispensed by the pressure bypass valve to a first predetermined threshold pressure, respectively to a second predetermined threshold pressure, when the brewing chamber and/or the upper piston are in the first closed position, respectively in the second closed position.

2. Full automatic coffee machine (100) according to Claim 1, wherein the second closed position of the brewing chamber defines the largest possible closed volume of the brewing chamber.

3. Full automatic coffee machine (100) according to Claim 1 or 2, wherein the first predetermined threshold pressure is greater than 4 bar and the second predetermined threshold pressure is less than 4 bar.

4. Full automatic coffee machine (100) according to any one of the precedent claims, wherein :
- the brewing chamber comprises the water inlet (13), and
- the upper piston (2) comprises the coffee outlet duct (21).

5. Full automatic coffee machine (100) according to any one of the precedent claims, wherein the coffee extraction unit comprises a coffee outlet valve (6), said valve being configured to dispense liquid from the liquid outlet duct either to a coffee dispensing area or to a waste collector.

6. Full automatic coffee machine (100) according to the precedent claim, wherein the coffee outlet valve (106) is actuated by the movement of the brewing chamber.

7. Full automatic coffee machine (100) according to any one of the precedent claims, wherein said machine comprises one tank (6) for storing coffee beans and one grinder (61) for grinding stored coffee beans and for dispensing roast and ground coffee in the brewing chamber (1).

8. Method for preparing a coffee beverage with a full automatic coffee apparatus according to any one of Claims 1 to 6, wherein said method comprises the steps of :
α - obtaining beverage selection input from the user about the type of preparation of the coffee in the list of at least a pressurized coffee and a filter like coffee,
β - based on the beverage selection input of step α, adjusting the predetermined threshold pressure of the bypass pressure valve to the first predetermined threshold pressure for a pressurized coffee or to the second predetermined threshold pressure for a filter like coffee,
a- in a dosing position, where the upper piston (2) is at a distance from the upper rim (12) of the chamber and outside the chamber, supplying a dose of roasted and ground coffee powder corresponding to the beverage selection input into the brewing chamber, then
b- based on the beverage selection input of step α, moving the chamber (1) and the upper piston (2) relatively one to the other to the first closed position for a pressurized coffee or to the second closed position for a filter like coffee, then
c - introducing hot water through the water inlet (3), extracting the coffee powder and dispensing extracted coffee beverage through the beverage outlet (21) of the upper piston.
e- discharging the extracted coffee powder from the chamber.

9. Method according to the precedent claim, wherein, if the beverage selection input of step α is a filter like coffee, then at the end of step c), said method comprises the steps of :
d1- actuating the coffee outlet valve (106) to dispense liquid from the liquid outlet duct to the waste collector (8), and
d2 - moving the chamber (1) and the upper piston (2) relatively one to the other to tamp the dose of extracted coffee powder and repeating this step at least once, preferably at least twice.

10. Method according to the precedent claim, wherein in step d2), the chamber (1) and the upper piston (2) are maintained in the tamping position between one and three seconds.

11. Method according to any one of Claims 8 to 10, wherein, if the beverage selection input of step α is a pressurized coffee, then at step b), the dose of coffee powder is compressed in the chamber (1) between the lower piston (3) and the upper piston (2).

12. Method according to any one of Claims 8 to 11 , wherein in step e), the chamber (1), the upper piston (2) and the lower piston (3) are moved relatively one to the other in order to :
. position the upper rim (12) of the chamber away from the upper piston (2), and
. position the lower piston (3) at the upper rim (12) of the brewing chamber, and
. discharging the extracted coffee powder from the lower piston.

## Patentansprüche

1. Vollautomatische Kaffeemaschine (100), die Maschine umfassend:
- eine Kaffeeextraktionseinheit (10), die Kaffeeextraktionseinheit umfassend:
. eine Brühkammer (1) zum Aufnehmen von geröstetem und gemahlenem Kaffeepulver, die Kammer umfassend einen oberen Rand (12), eine Bodenwand (11) und
. einen oberen Kolben (2),
. wobei der obere Kolben konfiguriert ist, um durch den oberen Rand der Brühkammer und im Inneren der Brühkammer weiter zu der relativen Bewegung der Brühkammer und des oberen Kolbens beweglich zu sein, und
. einen Wassereinlass (13),
. einen Flüssigkeitsauslasskanal (21);
. einen unteren Kolben (3), der im Inneren der Brühkammer (1) beweglich ist zwischen:
. einer untersten Position, wobei der untere Kolben auf dem Boden (11) der Brühkammer liegt, und
. einer höchsten Position, wobei der untere Kolben an dem oberen Rand (12) der Brühkammer ist,
. eine Ablassvorrichtung (4) für verbrauchten Kaffee,
. wobei die Brühkammer und/oder der obere Kolben relativ beweglich sind zwischen:
. einer offenen Position zum Einfüllen von geröstetem und gemahlenem Kaffeepulver oder zum Auswerfen von extrahiertem geröstetem und gemahlenem Kaffeepulver, und
. mindestens zwei unterschiedlichen ersten und zweiten geschlossene Positionen zum Brühen von geröstetem und gemahlenem Kaffeepulver, wobei die erste geschlossene Position zum Verdichten des Kaffees während des Brühvorgangs konfiguriert ist, und die zweite geschlossene Position zum Nichtverdichten des Kaffees während des Brühvorgangs konfiguriert ist,
- ein druckbeaufschlagtes Heißwasserfluidsystem, umfassend mindestens eine Wasserzufuhr (101), eine Wasserpumpe (102) und vorzugsweise eine Wassererhitzungsvorrichtung (104), wobei das System mit dem Wassereinlass (13) der Kaffeeextraktionseinheit verbunden ist,
wobei die vollautomatische Kaffeemaschine ein Steuerungssystem umfasst, das konfiguriert ist:
- zum Bewegen der Brühkammer und/oder des oberen Kolben in die erste geschlossene Position oder in die zweite geschlossene Position zum Brühen von geröstetem und gemahlenem Kaffeepulver,
**dadurch gekennzeichnet, dass:**
das Fluidzufuhrsystem ein Druckumgehungsventil (107) stromabwärts von der Wasserpumpe umfasst, und wobei der vorbestimmte Schwellendruck des Fluids, das durch das Druckumgehungsventil ausgegeben wird, anpassbar ist, vorzugsweise durch einen motorisierten Aktuator (1071), und
**dadurch, dass** das Steuerungssystem konfiguriert ist, um den vorbestimmten Schwellendruck des Fluids, das durch das Druckumgehungsventil ausgegeben wird, auf einen vorbestimmten Schwellendruck, beziehungsweise auf einen zweiten vorbestimmten Schwellendruck anzupassen, wenn die Brühkammer und/oder der obere Kolben in der ersten geschlossenen Position beziehungsweise in der zweiten geschlossenen Position sind.

2. Vollautomatische Kaffeemaschine (100) nach Anspruch 1, wobei die zweite geschlossene Position der Brühkammer das größtmögliche geschlossene Volumen der Brühkammer definiert.

3. Vollautomatische Kaffeemaschine (100) nach Anspruch 1 oder 2, wobei der erste vorbestimmte Schwellendruck größer als 4 bar und der zweite vorbestimmte Schwellendruck kleiner als 4 bar ist.

4. Vollautomatische Kaffeemaschine (100) nach einem der vorstehenden Ansprüche, wobei:
- die Brühkammer den Wassereinlass (13) umfasst und
- der obere Kolben (2) den Kaffeeauslasskanal (21) umfasst.

5. Vollautomatische Kaffeemaschine (100) nach einem der vorstehenden Ansprüche, wobei die Kaffeeextraktionseinheit ein Kaffeeauslassventil (6) umfasst, das konfiguriert ist, um Flüssigkeit aus dem Flüssigkeitsauslasskanal entweder in einen Kaffeeausgabebereich oder in einen Abfallbehälter abzugeben.

6. Vollautomatische Kaffeemaschine (100) nach dem vorstehenden Anspruch, wobei das Kaffeeauslassventil (106) durch die Bewegung der Brühkammer betätigt wird.

7. Vollautomatische Kaffeemaschine (100) nach einem der vorstehenden Ansprüche, wobei die Maschine einen Behälter (6) zum Aufbewahren von Kaffeebohnen und ein Mahlwerk (61) zum Mahlen der aufbewahrten Kaffeebohnen und zum Ausgeben des gerösteten und gemahlenen Kaffees in die Brühkammer (1) umfasst.

8. Verfahren zum Zubereiten eines Kaffeegetränks mit einem vollautomatischen Kaffeeapparat nach einem der Ansprüche 1 bis 6, wobei das Verfahren die Schritte umfasst:
α- Erhalten einer Getränkeauswahleingabe von dem Benutzer über den Typ der Zubereitung des Kaffees in der Liste von mindestens einem druckbeaufschlagten Kaffee und einer Art Filterkaffee,
β - basierend auf der Getränkeauswahleingabe aus Schritt α, Anpassen des vorbestimmten Schwellendrucks des Umgehungsdruckventils an den ersten vorbestimmten Schwellendruck für einen druckbeaufschlagten Kaffee oder an den zweiten vorbestimmten Schwellendruck für eine Art Filterkaffee,
a- in eine Dosierungsposition, wobei der obere Kolben (2) in einem Abstand von dem oberen Rand (12) der Kammer und außerhalb der Kammer ist, Zuführen einer Dosis von geröstetem und gemahlenem Kaffeepulver entsprechend der Getränkeauswahleingabe in die Brühkammer, dann
b- basierend auf der Getränkeauswahleingabe aus Schritt α, Bewegen der Kammer (1) und des oberen Kolben (2) relativ zueinander in die erste geschlossene Position für einen druckbeaufschlagten Kaffee oder in die zweite geschlossene Position für eine Art Filterkaffee, dann
c- Einfüllen von heißem Wasser durch den Wassereinlass (3), Extrahieren des Kaffeepulvers und Ausgeben des extrahierten Kaffeegetränks durch den Getränkeauslass (21) des oberen Kolbens.
e- Ablassen des extrahierten Kaffeepulvers aus der Kammer.

9. Verfahren nach dem vorstehenden Anspruch, wobei, falls die Getränkeauswahleingabe von Schritt a eine Art Filterkaffee ist, dann am Ende von Schritt c) das Verfahren die Schritte umfasst:
d₁- Betätigen des Kaffeeauslassventils (106), um Flüssigkeit aus dem Flüssigkeitsauslasskanal an den Abfallsammler (8) abzugeben, und
d₂- Bewegen der Kammer (1) und des obere Kolbens (2) relativ zueinander, um die Dosis des extrahierten Kaffeepulvers zu stampfen, und Wiederholen dieses Schritts mindestens einmal, vorzugsweise mindestens zweimal.

10. Verfahren nach dem vorstehenden Anspruch, wobei in Schritt d2) die Kammer (1) und der obere Kolben (2) in der Stampfposition zwischen einer und drei Sekunden gehalten werden.

11. Verfahren nach einem der Ansprüche 8 bis 10, wobei, falls die Getränkeauswahleingabe von Schritt α ein druckbeaufschlagter Kaffee ist, dann wird in Schritt b) die Dosis von Kaffeepulver in der Kammer (1) zwischen dem unteren Kolben (3) und dem oberen Kolben (2) komprimiert.

12. Verfahren nach einem der Ansprüche 8 bis 11, wobei in Schritt e) die Kammer (1), der obere Kolben (2) und der untere Kolben (3) relativ zueinander bewegt werden zum:
. Positionieren des oberen Rands (12) der Kammer von dem oberen Kolben (2) weg und
. Positionieren des unteren Kolbens (3) an dem oberen Rand (12) der Brühkammer und
. Ablassen des extrahierten Kaffeepulver aus dem unteren Kolben.

## Revendications

1. Machine à café entièrement automatique (100), ladite machine comprenant :
- une unité d'extraction de café (10), ladite unité d'extraction de café comprenant :
. une chambre d'infusion (1) pour recevoir de la poudre de café torréfié et moulu, ladite chambre comprenant un bord supérieur (12), une paroi inférieure (11), et
. un piston supérieur (2),
. ledit piston supérieur étant conçu pour être mobile à travers le bord supérieur de la chambre d'infusion et à l'intérieur de la chambre d'infusion suite au mouvement relatif de la chambre d'infusion et du piston supérieur, et
. une entrée d'eau (13),
. un conduit de sortie de liquide (21),
. un piston inférieur (3) mobile à l'intérieur de ladite chambre d'infusion (1) entre :
. une position la plus basse dans laquelle le piston inférieur se trouve au fond (11) de la chambre d'infusion, et
. une position la plus haute dans laquelle le piston inférieur se trouve au niveau du bord supérieur (12) de la chambre d'infusion,
. un dispositif d'évacuation (4) pour le café usagé,
. dans laquelle la chambre d'infusion et/ou le piston supérieur sont relativement mobiles entre :
. une position ouverte pour introduire de la poudre de café torréfié et moulu ou éjecter la poudre de café torréfié et moulu extraite, et
. au moins deux première et seconde positions fermées différentes conçues pour infuser de la poudre de café torréfié et moulu, dans laquelle la première position fermée est conçue pour compacter le café pendant l'infusion et la seconde position fermée est conçue pour ne pas compacter le café pendant l'infusion,
- un système de fluide d'eau chaude sous pression comprenant au moins une alimentation en eau (101), une pompe à eau (102) et, de préférence, un dispositif de chauffage d'eau (104), dans laquelle ledit système est raccordé à l'entrée d'eau (13) de l'unité d'extraction de café,
dans laquelle la machine à café entièrement automatique comprend un système de commande configuré :
- pour déplacer la chambre d'infusion et/ou le piston supérieur dans la première position fermée ou dans la seconde position fermée pour infuser de la poudre de café torréfié et moulu,
**caractérisée en ce que :**
le système d'alimentation en fluide comprend une vanne de dérivation de pression (107) en aval de la pompe à eau et dans laquelle la pression seuil prédéterminée du fluide distribué par ladite vanne de dérivation de pression est réglable, de préférence par un actionneur motorisé (1071), et
**en ce que** le système de commande est configuré pour régler la pression seuil prédéterminée du fluide distribué par la vanne de dérivation de pression à une première pression seuil prédéterminée, respectivement à une seconde pression seuil prédéterminée, lorsque la chambre d'infusion et/ou le piston supérieur sont dans la première position fermée, respectivement dans la seconde position fermée.

2. Machine à café entièrement automatique (100) selon la revendication 1, dans laquelle la seconde position fermée de la chambre d'infusion définit le volume fermé le plus grand possible de la chambre d'infusion.

3. Machine à café entièrement automatique (100) selon la revendication 1 ou 2, dans laquelle la première pression seuil prédéterminée est supérieure à 4 bar et la seconde pression seuil prédéterminée est inférieure à 4 bar.

4. Machine à café entièrement automatique (100) selon l'une quelconque des revendications précédentes, dans laquelle :
- la chambre d'infusion comprend l'entrée d'eau (13), et
- le piston supérieur (2) comprend le conduit de sortie de café (21).

5. Machine à café entièrement automatique (100) selon l'une quelconque des revendications précédentes, dans laquelle l'unité d'extraction de café comprend une vanne de sortie de café (6), ladite vanne étant conçue pour distribuer du liquide depuis le conduit de sortie de liquide soit vers une zone de distribution de café, soit vers un collecteur de déchets.

6. Machine à café entièrement automatique (100) selon la revendication précédente, dans laquelle la vanne de sortie de café (106) est actionnée par le mouvement de la chambre d'infusion.

7. Machine à café entièrement automatique (100) selon l'une quelconque des revendications précédentes, dans laquelle ladite machine comprend un réservoir (6) pour stocker les grains de café et un broyeur (61) pour moudre les grains de café stockés et pour distribuer du café torréfié et moulu dans la chambre d'infusion (1).

8. Procédé de préparation d'une boisson au café avec un appareil à café entièrement automatique selon l'une quelconque des revendications 1 à 6, dans lequel ledit procédé comprend les étapes consistant à :
α- obtenir de l'utilisateur une sélection de boisson concernant le type de préparation du café dans la liste comprenant au moins un café sous pression et un café de type filtre,
β- sur la base de l'entrée de sélection de boisson de l'étape α, régler la pression seuil prédéterminée de la vanne de pression de dérivation à la première pression seuil prédéterminée pour un café sous pression ou à la seconde pression seuil prédéterminée pour un café de type filtre,
a- dans une position de dosage, où le piston supérieur (2) est à une distance du bord supérieur (12) de la chambre et à l'extérieur de la chambre, fournir une dose de poudre de café torréfié et moulu correspondant à l'entrée de sélection de boisson dans la chambre d'infusion, puis
b- sur la base de l'entrée de sélection de boisson de l'étape α, déplacer la chambre (1) et le piston supérieur (2) relativement l'un par rapport à l'autre vers la première position fermée pour un café sous pression ou vers la seconde position fermée pour un café de type filtre, puis
c- introduire de l'eau chaude par l'entrée d'eau (3), extraire la poudre de café et distribuer la boisson au café extraite par la sortie de boisson (21) du piston supérieur.
e- évacuer la poudre de café extraite de la chambre.

9. Procédé selon la revendication précédente, dans lequel, si l'entrée de sélection de boisson de l'étape α est un café de type filtre, alors à la fin de l'étape c), ledit procédé comprend les étapes consistant à :
d₁- actionner la vanne de sortie de café (106) pour distribuer du liquide depuis le conduit de sortie de liquide vers le collecteur de déchets (8), et
d₂- déplacer la chambre (1) et le piston supérieur (2) relativement l'un par rapport à l'autre pour tasser la dose de poudre de café extraite et répéter cette étape au moins une fois, de préférence au moins deux fois.

10. Procédé selon la revendication précédente, dans lequel, à l'étape d₂), la chambre (1) et le piston supérieur (2) sont maintenus dans la position de bourrage entre une et trois secondes.

11. Procédé selon l'une quelconque des revendications 8 à 10, dans lequel, si l'entrée de sélection de la boisson de l'étape α est un café sous pression, alors à l'étape b), la dose de poudre de café est comprimée dans la chambre (1) entre le piston inférieur (3) et le piston supérieur (2).

12. Procédé selon l'une quelconque des revendications 8 à 11, dans lequel, à l'étape e), la chambre (1), le piston supérieur (2) et le piston inférieur (3) sont déplacés relativement l'un par rapport à l'autre afin de :
. positionner le bord supérieur (12) de la chambre à l'écart du piston supérieur (2), et
. positionner le piston inférieur (3) au niveau du bord supérieur (12) de la chambre d'infusion, et
. évacuer la poudre de café extraite du piston inférieur.
